Europäisches Patentamt

European Patent Office

Office européen des brevets

(19)

(11) Veröffentlichungsnummer: **0 154 214**
**A2**

(12) **EUROPÄISCHE PATENTANMELDUNG**

(21) Anmeldenummer: 85101482.9

(22) Anmeldetag: 12.02.85

(51) Int. Cl.⁴: **B 60 T 8/36**

(30) Priorität: 06.03.84 DE 3408123

(43) Veröffentlichungstag der Anmeldung:
11.09.85 Patentblatt 85/37

(84) Benannte Vertragsstaaten:
BE DE FR GB IT NL SE

(71) Anmelder: Knorr-Bremse GmbH
Moosacher Strasse 80
D-8000 München 40(DE)

(72) Erfinder: Eckhart, Alfred
Friedenheimerstrasse 46
D-8000 München 21(DE)

(54) Steuerventileinrichtung, insbesondere für Blockierschutzanlagen.

(57) Die Ventilmembranen (8, 9) einer Steuerventileinrichtung, insbesondere für Blockierschutzeinrichtungen, sind zur
weitgehenden Vermeidung von Wasser- und Schmutzablagerung senkrecht angeordnet. Hierzu sind die Vorsteuerkanäle (12 und 13) an die tiefsten Stellen der Vorsteuerräume
(10 und 11) gelegt. Die Kanalführung vom Magnetventil (14)
zum Vorsteuerraum (10) des Eingangs- bzw. Halteventils (8)
ist vergleichsweise sehr kurz gehalten und ist frei von
wesentlichen Umlenkungen, so daß sehr schnelle Ventilansprechzeiten erhalten werden. Die querschnittsoptimierte
Kanalführung und die Anordnung der Ventileinrichtung,
insbesondere vom Gehäusebremsanschluß (26) über das
Auslaßventil (3) zur Entlüftung (30), sichert eine gute Entlüftungscharakteristik.

FIG. 2

Knorr-Bremse GmbH
Moosacher Straße 80
8000 München 40

München, 28.02.1984
TP1-pd-so
- 1783 -

0154214

Steuerventileinrichtung, insbesondere
für Blockierschutzanlagen

Die Erfindung betrifft eine Steuerventileinrichtung
gemäß dem Oberbegriff des Anspruches 1.

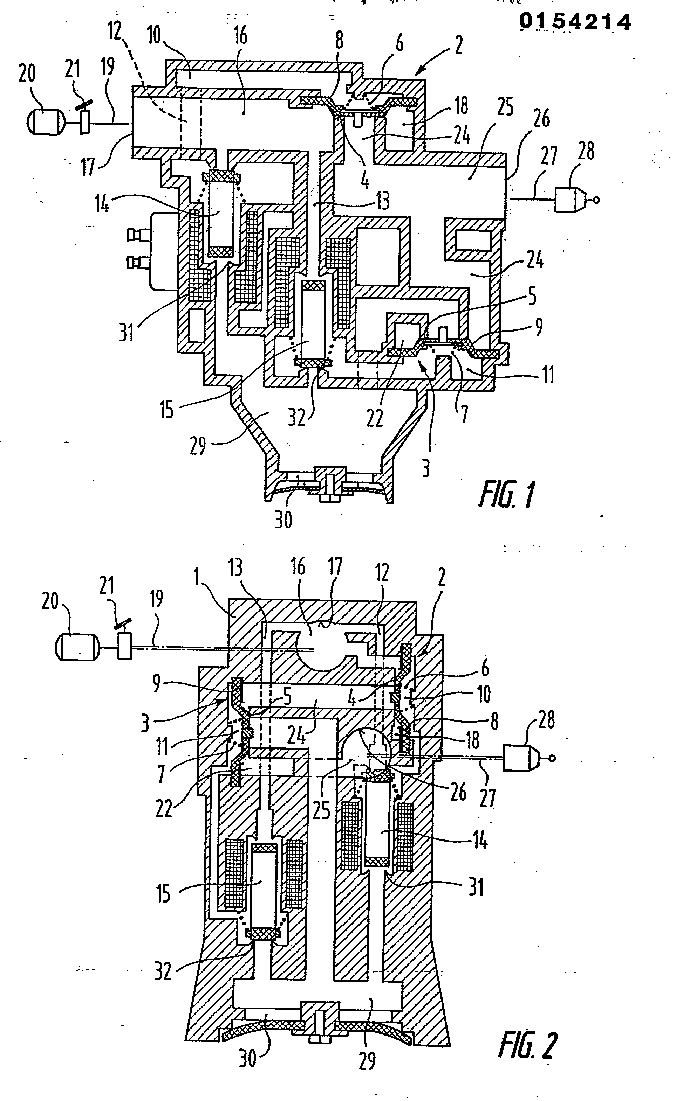

Es ist eine Steuerventileinrichtung mit den Merkmalen des
Oberbegriffes des Anspruches 1 bekannt, die in Fig. 1
der beiliegenden Zeichnung schematisch dargestellt ist.

In dem Ventilgehäuse 1 der bekannten Steuerventileinrichtung befindet sich ein Ein- und ein Auslaßventil
2, 3. Das Einlaßventil 2 wird auch als Halteventil bezeichnet. Beide Ventile 2, 3 sind jeweils von einem
gehäusefesten Ein-. bzw. Auslaßventilsitz 4, 5 und
von einer gegenüber dem Ventilsitz im Ventilgehäuse 1
fest eingespannten Ein- bzw. Auslaßventilmembran 8, 9
gebildet. Die beiden Membranen sind jeweils von einer
Feder 6, 7 in Ventilsitzrichtung vorgespannt. Sie begrenzen jeweils einen Vorsteuerraum 10, 11, von denen
der eine (erste) Vorsteuerraum 10 an einen ersten
Vorsteuerkanal 12 und der andere (zweite) Vorsteuerraum 11 an einen zweiten Vorsteuerkanal 13 angeschlossen
ist. Beide Vorsteuerkanäle 12, 13 werden jeweils von
einem elektromagnetischen Vorsteuerventil 14, 15 überwacht. Außerdem zweigen beide Vorsteuerventile von
einem Hauptsteuerraum 16 ab, der an den Ventileinlaß-

- 2 -

raum 18 für den Einlaßventilsitz 4 anschließt und der mit dem Gehäusehauptanschluß 17 verbunden ist. An diesen Gehäusehauptanschluß 17 schließt eine Hauptleitung 19 an, die die Verbindung zu einem Druckluftbehälter 20 und einem vorgeschalteten Bremssteuerventil 21 darstellt. Der Auslaßventilsitz 5 ragt hingegen in einen Ventilauslaßraum 22 des Gehäuses 1 hinein, der mit einem Bremssteuerraum 25 in Verbindung steht, welcher an einen Gehäusebremsanschluß 26 anschließt. An den Gehäusebremsanschluß 26 ist eine Bremsleitung 27 geführt, die an wenigstens einen Bremszylinder 28 angeschlossen ist. Der Einlaßventilsitz 4 ist an den Bremssteuerraum 25 und der Auslaßventilsitz 5 ist an einen Entlüftungsraum 29 angeschlossen, der einerseits mit den Entlüftungen der Vorsteuerventile 14, 15 und andererseits mit der Entlüftungsöffnung 30 in Verbindung steht.

Nach der Darstellung der bekannten Ventileinrichtung in Fig. 1 sind zur Druckbeaufschlagung des Bremszylinders 28 beide Magnetventile 14, 15 nicht erregt. Der Einlaß vom Magnetventil 14 und die Entlüftung vom Magnetventil 15 sind geschlossen. Die Vorsteuerkammer 10 der Einlaßventilmembran 8 ist drucklos. Die am Gehäusehauptanschluß 17 anstehende Druckluft gelangt von dem Hauptsteuerraum 16 über den Einlaßventilsitz 4 in den Bremssteuerraum 25 und von dort über den Gehäusebremsanschluß 26 und die Bremsleitung 27 in den Bremszylinder 28.

Um den Druck im Bremszylinder 28 abzubauen, wird das Magnetventil 14 erregt, wodurch es den Vorsteuerkanal 12 an den Hauptsteuerraum 16 anschließt. Hierdurch gelangt die in dem Hauptsteuerraum 16 anstehende Druckluft in die Vorsteuerkammer 10. Die Membran 8 schließt daraufhin den Ventilsitz 4 ab, so daß eine Verbindung zwischen dem Hauptsteuerraum 16 und dem Bremszylinderraum 25 unterbunden ist. Gleichzeitig mit dem Magnetventil 14 wird auch das Magnetventil 15 erregt, das den Einlaß absperrt und die Entlüftung öffnet. Die in der Vorsteuerkammer 11 des Auslaßventils 3 anstehende Druckluft kann damit über die Entlüftungskammer 29 und die Entlüftungsöffnung 30 entweichen. Gleichzeitig öffnet die Auslaßventilmembran 9 den Ventilsitz 5 und gibt damit den gesamten Entlüftungsquerschnitt frei. Die im Bremssteuerraum 25 anstehende Druckluft gelangt über den Entlüftungsraum und die Entlüftungsöffnung 30 ins Freie, die an der tiefsten Stelle des Gehäuses liegt.

Soll der Druck im Bremszylinder auf einem bestimmten Niveau gehalten werden, so wird wiederum das Magnetventil 14 erregt, wodurch in vorstehender Weise der Vorsteuerraum 10 mit Druckluft beaufschlagt wird. Über das nicht-erregte Magnetventil 15 ist auch der Vorsteuerraum 11 mit Druckluft beaufschlagt. Auf diese Weise sind beide Membranen 8 und 9 auf ihre Ventilsitze 4 und 5 gedrückt. Ein Druckanstieg oder Druckabfall im Bremszylinder 28 wird somit vermieden..

Die bekannte Steuerventileinrichtung mit den waagerecht eingebauten Membranen 8, 9 weist den Nachteil auf, daß Kondenswasser oder Schmutz über den Vorsteuerkanal 12 in den Vorsteuerraum 10 und von dort auf die etwas tiefer liegende Membran 8 gelangen kann, die das Kondenswasser bzw. den Schmutz gefangen hält, der nicht ohne weiteres ausgetragen werden kann, wodurch die Funktion des Einlaßventils beeinträchtigt und der Verschleiß am Ventil erhöht wird. Außerdem sind die Kanalführungen zwischen den beiden Ventilen 2 und 3 strömungsungünstig. Die Kanalführung zwischen dem Magnetventil 14 und dem Einlaß- oder Halteventil 2 ist relativ lang und weist strömungsungünstige Umlenkungen auf. Für die wichtigen Steuerfunktionen (Druckhaltung in der Entlüftungsphase; Druckanstieg aus der Haltephase) ergeben sich relativ lange Ansprechzeiten.

Aufgabe der Erfindung ist es daher, eine Steuerventileinrichtung der eingangs genannten Art mit einer querschnittoptimierten Kanalführung und einer wesentlich verbesserten Entlüftungscharakteristik anzugeben. Dabei sollen Wasser- und Schmutzablagerung im Ventil, insbesondere auf der Einlaßventilmembran 8, vermieden werden. Außerdem sollen lange Kanalführungen zwischen dem Magnetventil und dem Vorsteuerraum des Einlaßventils mit Kanalumlenkungen entbehrlich sein, um die Ansprechzeit des Ventils beachtlich verbessern zu können, was besonders wichtig ist für exakte und kleine Taktfrequenzen beim Magnetpulsen.

Die Aufgabe wird erfindungsgemäß mit den kennzeichnenden Merkmalen des Anspruches 1 gelöst. Vorteilhafte Ausführungen nach der Erfindung ergeben sich aus den Merkmalen der Unteransprüche.

Die Erfindung wird anhand der Fig. 2 der beigefügten Zeichnung für ein Ausführungsbeispiel beschrieben.

Die Fig. 2 zeigt das Ausführungsbeispiel in einer vertikalen Schnittansicht. Entsprechende Teile der bekannten Ausführung nach Fig. 1 und der erfindungsgemäßen Ausführung nach Fig. 2 sind mit den gleichen Bezugszeichen versehen. Die Funktionen der bekannten und der erfindungsgemäßen Ventileinrichtungen sind grundsätzlich dieselben, so daß insoweit auf die vorstehende Funktionsbeschreibung zu Fig. 1 verwiesen werden kann.

Die wesentlichen Unterschiede der erfindungsgemäßen Ventileinrichtung nach Fig. 2 gegenüber der bekannten Ventileinrichtung nach Fig. 1 sind nachstehend aufgeführt:

Im eingebauten Zustand der Ventileinrichtung befindet sich

a) die Ein- und Auslaßventilmembranen 8, 9 jeweils in einer senkrechten Lage;

b) die waagerechten Achsen durch die Zentren der beiden Ein- und Auslaßventile 2, 3 sind zur im wesentlichen waagerechten Kanalführung zwischen den beiden Ventilen höhenversetzt zueinander;

c) die waagerechte Achse durch das Zentrum des Gehäusehauptanschlusses mit dem anschließenden Hauptsteuerraum 16 liegt oberhalb und im rechten Winkel zu den beiden Achsen der Ein- und Auslaßventile 2, 3;

d) die Ein- und Auslaßventile 2, 3 und der Gehäusehauptanschluß 17 wie der Gehäusebremsanschluß 26 liegen jeweils oberhalb der beiden Vorsteuermagnetventile 14, 15;

e) die schmalen Vorsteuerräume 10 und 11 zu beiden Seiten der Ventilmembranen 8, 9 liegen im wesentlichen senkrecht;

f) die Vorsteuerkanäle 12, 13 schließen jeweils an die tiefsten Stellen der Vorsteuerräume 10, 11 an;

g) der Einlaß des Vorsteuermagnetventils 14 zur Überwachung des an die Vorsteuerkammer 10 des Einlaßventils 2 angeschlossenen Vorsteuerkanals 12 liegt zur Bildung eines weitgehend kurzen, im wesentlichen umlenkungsfreien Vorsteuerkanals räumlich in unmittelbarer Nähe unterhalb der Vorsteuerkammer 10;

h) die Vorsteuerkanäle 12, 13 schließen an den Hauptsteuerraum 16 oberhalb seines tiefstliegenden
Bodenabschnittes an.

Durch die senkrechten Membrananordnungen und der an
den tiefsten Stellen der Vorsteuerräume 10 und 11 angelegten Vorsteuerkanäle 12 und 13 wird erfindungsgemäß eine Wasser- und Schmutzablagerung im Gegensatz
zum Stand der Technik weitgehend vermieden. Die Kanalführung vom Magnetventil 14 zum Einlaßventil 2 ist erfindungsgemäß vergleichsweise sehr kurz und ist außerdem
frei von nachteiligen Umlenkungen, so daß sich für die
wichtigen Steuerfunktionen (Druckhalten in der Entlüftungsphase und Druckanstieg aus der Haltephase)
vergleichsweise sehr schnelle Ansprechzeiten ergeben,
was für exakte und kleine Taktfrequenzen beim Magnetpulsen besonders wichtig ist. Bei der erfindungsgemäßen Ausführung wird außerdem eine querschnittsoptimierte Kanalführung und Anordnung vom Gehäusebremsanschluß 26 über das Auslaßventil 3 zur Entlüftung 30
mit einer vergleichsweise verbesserten Entlüftungscharakteristik erreicht.

Kurzfassung

Die Ventilmembranen 8, 9 einer Steuerventileinrichtung,
insbesondere für Blockierschutzeinrichtungen, sind zur
weitgehenden Vermeidung von Wasser- und Schmutzablagerung
senkrecht angeordnet. Hierzu sind die Vorsteuerkanäle 12
und 13 an die tiefsten Stellen der Vorsteuerräume 10 und
11 gelegt. Die Kanalführung vom Magnetventil 14 zum Vorsteuerraum 10 des Eingangs- bzw. Halteventils 8 ist
vergleichsweise sehr kurz gehalten und ist frei von wesentlichen Umlenkungen, so daß sehr schnelle Ventilansprechzeiten erhalten werden. Die querschnittsoptimierte
Kanalführung und die Anordnung der Ventileinrichtung,
insbesondere vom Gehäusebremsanschluß 2 über das Aus-

- 7 -

7

0154214

laßventil 3 zur Entlüftung 30, sichert eine gute Entlüftungscharakteristik.

Knorr-Bremse GmbH                    München, 28.02.1984
Moosacher Straße 80                  TP1-pd-so
8000 München 40                      - 1783 -

P a t e n t a n s p r ü c h e

1. Steuerventileinrichtung, insbesondere für Blockierschutzanlagen mit in einem Ventilgehäuse (1) angeordneten Ein- und Auslaßventil (2, 3), die jeweils einerseits von einem gehäusefesten Ein- bzw. Auslaßventilsitz (4,5) und andererseits von einer gegenüber dem Ventilsitz im Ventilgehäuse (1) fest eingespannten und in Ventilsitzrichtung jeweils von einer Feder (6, 7) beaufschlagten Ein- bzw. Auslaßventilmembran (8, 9) gebildet sind, die ihrerseits jeweils einen Vorsteuerraum (10, 11) begrenzen, von denen der erste Vorsteuerraum (10) an einen ersten Vorsteuerkanal (12) und der zweite Vorsteuerraum (11) an einen zweiten Vorsteuerkanal (13) anschließt, wobei beide jeweils von einem elektromagnetischen Vorsteuerventil (14, 15) überwachten Vorsteuerkanäle (12, 13) von einem Hauptsteuerraum (16) abzweigen, der an den Ventileinlaßraum (18) für den Einlaßventilsitz (4) anschließt und der mit einem Gehäusehauptanschluß (17) verbunden ist, an den eine Hauptleitung (19) in Verbindung mit einem Druckluftvorratsbehälter (20) und einem vorgeschalteten Bremssteuerventil (21) angeschlossen ist, während der Auslaßventilsitz (5) in einen Ventilauslaßraum (22) hineinragt, der an einen Bremssteuerraum (25) anschließt, welcher mit einem Gehäusebremsanschluß (26) in Verbindung steht, an den eine Bremsleitung (27) mit wenigstens einem Bremszylinder (28) anschließt und wobei der Einlaßventilsitz (4) an den Bremssteuerraum (25)

- 2 -

und der Auslaßventilsitz (5) an einen Entlüftungsraum (29) anschließt, der außerdem mit den Entlüftungen (31, 32) der Vorsteuerventile (14, 15) verbunden ist und an eine Entlüftungsöffnung (30) anschließt, gekennzeichnet durch folgende Merkmale:

Im eingebauten Zustand der Ventileinrichtung befindet sich

a) die Ein- und Auslaßventilmembranen (8,9) in senkrechter Lage;

b) die waagerechten Achsen durch die Zentren der beiden Ein- und Auslaßventile (2, 3) sind zur im wesentlichen waagerechten Kanalführung zwischen den beiden Ventilen zueinander höhenversetzt;

c) die waagerechte Achse durch das Zentrum des Gehäusehauptanschlusses (17) mit dem anschließenden Hauptsteuerraum (16) liegt oberhalb und im rechten Winkel zu den beiden Achsen der Ein- und Auslaßventile (2, 3);

d) die Ein- und Auslaßventile (2, 3) und der Gehäusehauptanschluß (17) sowie der Gehäusebremsanschluß (26) liegen jeweils oberhalb der beiden Vorsteuermagnetventile (14, 15);

e) die Vorsteuerräume (10, 11) zu beiden Seiten der Ventilmembranen (8, 9) liegen im wesentlichen senkrecht;

f) die Vorsteuerkanäle (12, 13) schließen jeweils an die tiefsten Stellen der Vorsteuerräume (10, 11) an.

2. Steuerventileinrichtung nach Anspruch 1, dadurch gekennzeichnet, daß der Einlaß des Vorsteuermagnetventils (14) zur Überwachung des an die Vorsteuerkammer (10) des Einlaßventiles (2) angeschlossenen Vorsteuerkanals (12) zur Bildung eines weitgehend kurzen, im wesentlichen umlenkungsfreien Vorsteuerkanals räumlich in unmittelbarer Nähe unterhalb der Vorsteuerkammer (10) liegt.

3. Steuerventileinrichtung nach Anspruch 1 oder 2, dadurch gekennzeichnet, daß die Rückführungskanäle (12, 13) und die Verbindung zum Ventileinlaßraum (18) an den Hauptsteuerraum (16) mit wesentlichem Abstand oberhalb von seinem tiefstliegenden Bodenwandabschnitt anschließen.

0154214

FIG. 1

FIG. 2